# EUROPEAN PATENT SPECIFICATION

(11) **EP 4 030 369 B1**
(45) Date of publication and mention of the grant of the patent: **19.11.2025**
(21) Application number: 21213263.3
(22) Date of filing: 08.12.2021
(51) Int. Cl.: G06Q 10/087, G06Q 10/0837, G06Q 20/20, G07G 1/00, G07G 1/01, G07G 1/14, G06Q 10/08

(54) **NOTIFICATION DEVICE AND NOTIFICATION METHOD**
BENACHRICHTIGUNGSVORRICHTUNG UND BENACHRICHTIGUNGSVERFAHREN
DISPOSITIF DE NOTIFICATION ET PROCÉDÉ DE NOTIFICATION

(30) Priority: 19.01.2021 JP 2021006264
(43) Date of publication of application: 20.07.2022
(73) Proprietor: Toshiba TEC Kabushiki Kaisha, Tokyo 141-8562 (JP)
(72) Inventor: Hara, Noriyoshi, Shinagawa-ku, Tokyo 141-8562 (JP)
(74) Representative: Bandpay & Greuter

(56) References cited:
- JP-B1- 6 653 813
- US-A1- 2015 012 396
- US-A1- 2020 027 218
- US-A1- 2020 202 163
- WANKHEDE KIRTI ET AL: "Just Walk-Out Technology and its Challenges: A Case of Amazon Go", 2018 INTERNATIONAL CONFERENCE ON INVENTIVE RESEARCH IN COMPUTING APPLICATIONS (ICIRCA), IEEE, 11 July 2018 (2018-07-11), pages 254 - 257, XP033490312, DOI: 10.1109/ICIRCA.2018.8597403

## Description

### FIELD

Embodiments described herein relate generally to a notification device and a notification method related to notifications regarding removal and replacement of items from storage locations.

### BACKGROUND

In daily life, it is often the case that an article taken from storage space, such as a shelf, may be returned to a different storage space.

For example, in a supermarket or the like, when a shopper decides not to purchase an item and thus return the item that previously taken from a specific location on the sales floor, the shopper will often just place the item on the nearest location on the sales floor rather than take the trouble to return the item to its original location on the sales floor.

Also known in the art are:
- The patent application US 2020/202163 A1, which discloses a target positioning system, comprising a 3D image acquisition device that acquires at least one frame of 3D image in real time, wherein the 3D image comprises all or part of images of at least one target object; and a target coordinate generator in a data processing equipment, that establishes a 3D coordinate system in a closed space, and acquires coordinates or a group of coordinates of the target object in the 3D coordinate system in real time according to the at least one frame of 3D image;
- the patent JP 6653813 B1, which discloses n information processing system used in a store where one or more people including a product purchaser exist;
- the patent application US 2015/012396 A1, which discloses a system for automatically transitioning items from a materials handling facility without delaying a user as they exit the materials handling facility;
- the patent application US 2020/027218A1, which discloses a projected image item tracking system that analyzes projected camera images to determine items taken from, placed on, or moved on a shelf or other area in an autonomous store;
- the publication: "Just Walk-Out Technology and its Challenges: A Case of Amazon Go", which discusses the technology used in Amazon go store, how it is implemented and the details about how it works.

Under these circumstances, it is desirable to provide a technological solution such that a person who places an article in the wrong storage space can be informed of the misplacement.

### BRIEF DESCRIPTION OF THE DRAWINGS

FIG. 1 is a block diagram of a notification device and display fixtures according to a first embodiment.
FIG. 2 depicts a notification device and display fixtures.
FIG. 3 is a diagram schematically illustrating the structure of data records included in a management table.
FIG. 4 is a flowchart of notification control processing.
FIG. 5 depicts a display fixture according to a second embodiment.
FIG. 6 is a block diagram of a display fixture and related systems.
FIG. 7 is a block diagram of a commodity monitoring unit and related devices.
FIG. 8 is a flowchart of a monitoring processing.

### SUMMARY

The invention is set out in the appended set of claims.

### DETAILED DESCRIPTION

Hereinafter, certain example embodiments will be described with reference to drawings.

### [First Embodiment]

In a first embodiment, a notification device for a retail store to be used for notifying the misplacement of a commodity in a display fixture used for displaying the commodity for sale will be described as an example.

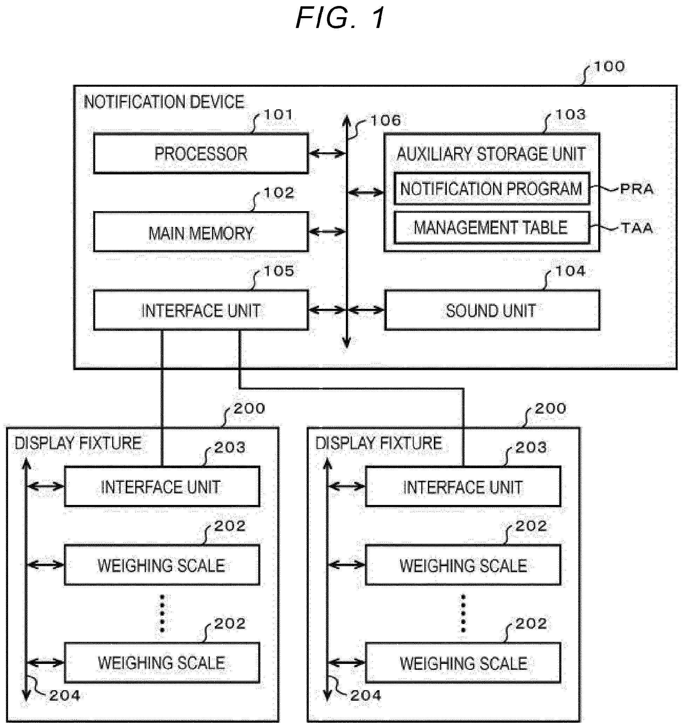

FIG. 1 is a block diagram illustrating a configuration of a notification device 100 according to the first embodiment. In the first embodiment, the notification device 100 monitors two display fixtures 200. However, the number of display fixtures 200 to be monitored by the notification device 100 may be any number.

The display fixture 200 provides a storage space for commodities (items of sale). In generally, the shape, size, and form of a display fixture 300 are arbitrarily selectable.

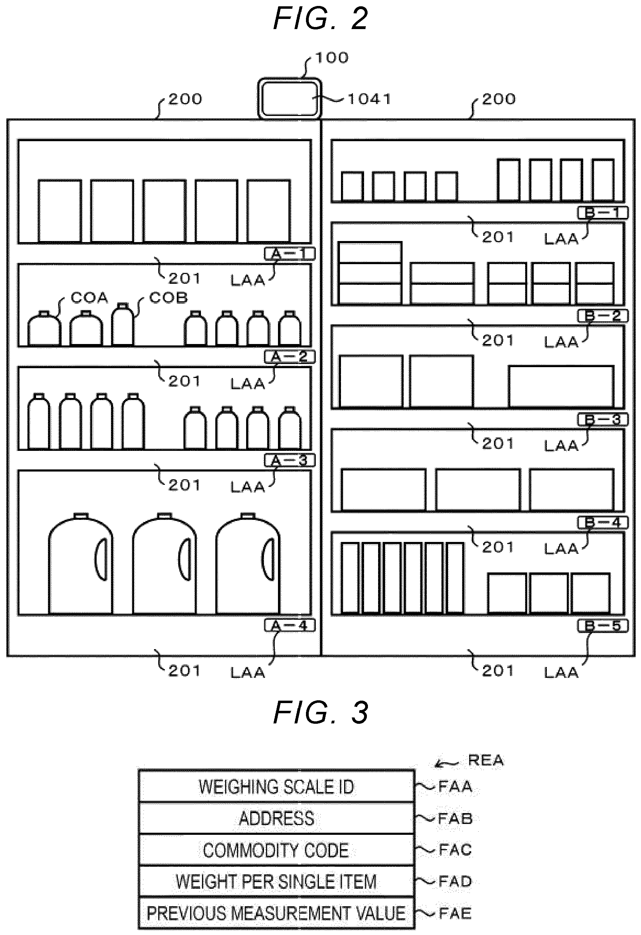

FIG. 2 is a diagram illustrating the appearance of the notification device 100 and the display fixtures 200 in the first embodiment.

As illustrated in FIG. 2, each display fixture 200 in the first embodiment includes shelves. Each display fixture 200 includes a plurality of shelf boards 201. In the example of FIG. 2, the display fixture 200 illustrated on the left side has four shelf boards 201, and the display fixture 200 illustrated on the right side has five shelf boards 201. Each shelf board 201 forms a storage space or location for commodities in a region above the shelf board 201. Individual addresses are assigned to these storage spaces formed by the shelf boards 201, and a label LAA indicating a particular address is affixed to the front surface of each shelf board 201. In FIG. 2, the label LAA "A-1" is affixed to the uppermost shelf board 201 of the display fixture 200 illustrated on the left side, and thus the address of the storage space above the shelf board 201 is "A-1". The label LAA "B-5" is affixed to the shelf board 201 at the bottom of the display fixture 200 illustrated on the right side, and the address of the storage space formed above this shelf board 201 is therefore "B-5".

As illustrated in FIG. 1, each display fixture 200 is provided with weighing scales 202, an interface unit 203, and a transmission line 204. However, in some examples, only one weighing scale 202 might be provided for a display fixture 200.

The weighing scales 202 measure the weight of the items placed on a shelf board 201. If a plurality of different types of commodities are to be placed on one shelf board 201, then multiple weighing scales 202 can be provided on the shelf board 201. For example, the second shelf board 201 from the top of the display fixture 200 illustrated on the left side in FIG. 2 is provided with two weighing scales 202 arranged side by side with each other. The weighing scale 202 outputs measurement data representing measured weight of the items in the corresponding storage space to the notification device 100 via the interface unit 203.

The interface unit 203 permits data to be exchanged between the notification device 100 and the display fixture 200. As the interface unit 203, various interface board types such as a Universal Serial Bus (USB) board can be used.

The transmission line 204 includes an address bus, a data bus, a control signal line, and the like, and transmits various data including measurement data between the weighing scale 202 and the interface unit 203.

As illustrated in FIG. 1, the notification device 100 includes a processor 101, a main memory 102, an auxiliary storage unit 103, a sound unit 104, an interface unit 105, and a transmission line 106.

The notification device 100 is attached to the display fixture 200. In the example of FIG. 2, the notification device 100 is mounted on the top plate of the display fixture 200.

A computer for controlling the notification device 100 includes the processor 101, the main memory 102, and the auxiliary storage unit 103 connected by the transmission line 106.

The processor 101 corresponds to the central portion of a computer. The processor 101 executes information processing for realizing various functions of the notification device 100 according to an information processing program such as an operating system and/or an application program. The processor 101 is, for example, a central processing unit (CPU).

The main memory 102 includes a non-volatile memory area and a volatile memory area. The main memory 102 stores the above information processing program in the non-volatile memory area. The main memory 102 may store data necessary for the processor 101 to execute information processing in the non-volatile or volatile memory area. The main memory 102 uses a volatile memory area as a work area where data is appropriately rewritten by the processor 101. The nonvolatile memory area is, for example, read-only memory (ROM). The volatile memory area is, for example, random access memory (RAM).

As the auxiliary storage unit 103 an electric erasable programmable read-only memory (EEPROM) can be used. The auxiliary storage unit 103 can also be other storage device types such as a hard disk drive (HDD) or a solid state drive (SSD). The auxiliary storage unit 103 stores data used by the processor 101 to perform various processing, data created by the processing of the processor 101, and the like. The auxiliary storage unit 103 may store the above information processing program. In the present embodiment, the auxiliary storage unit 103 stores a notification program PRA. The notification program PRA is a control program that includes instructions for information processing associated with a notification operation. A part of the storage area of the auxiliary storage unit 103 is used as a management table TAA. The management table TAA is a data table for managing each of the weighing scales 202 provided on the display fixture 200. The management table TAA may be stored in the main memory 102.

The sound unit 104 outputs various sounds such as voice, tones, and melodies. The sound unit 104 includes a speaker 1041 that is directed in front of the display fixture 200 as illustrated in FIG. 2. As the speaker 1041, a directional speaker pointing towards a region in front of the display fixture 200 being monitored by the notification device 100 may be preferrable in some examples.

The interface unit 105 permits data to be exchanged between the notification device 100 and the display fixture 200. For the interface unit 105, the same standard as the interface unit 203 can be used. The interface unit 105 and the interface unit 203 are electrically connected by a communication cable. In other examples, the interface unit 105 and the interface unit 203 may perform wireless communication between each other.

The transmission line 106 includes an address bus, a data bus, a control signal line, and the like, and transmits data and control signals exchanged between each connected unit.

The transfer of the notification device 100 is generally performed in a state where the notification program PRA is stored in the auxiliary storage unit 103. However, the hardware of the notification device 100 in a state where the notification program PRA is not stored in the auxiliary storage unit 103 and the notification program PRA may be individually transferred. Then, the notification program PRA may be written in the auxiliary storage unit 103 in response to an operation by an administrator of the notification device 100 or the like. The notification program can be transferred by recording the notification program on a removable recording medium such as a magnetic disk, a magneto-optical disk, an optical disk, or a semiconductor memory, or by communicating via a network.

FIG. 3 is a diagram schematically illustrating the structure of a data record REA included in the management table TAA.

The management table TAA is a set of data records REA. One data record REA is associated with each of the weighing scales 202 provided on the display fixture 200 to be monitored. The data record REA includes fields FAA, FAB, FAC, FAD, and FAE. In the field FAA, a weighing scale ID (identifier) as an identifier of the associated weighing scale 202 is set. In the field FAB, the address assigned to the storage space formed by the shelf board 201 provided with the associated weighing scale 202 is set. In the field FAC, a commodity code as an identifier of a commodity placed in a storage space formed by the shelf board 201 provided with the associated weighing scale 202 is set. In the field FAD, the weight per commodity identified by the commodity code set in the field FAC is set as weight per single item. In the field FAE, the measurement value acquired from the associated weighing scale 202 is set as a previous measurement value. The data record REA may include a field in which any data other than the above is set. Further, a part of the fields FAA, FAB, FAC, FAD, and FAE may not be included in the data record REA, for example, the field FAC.

The management table TAA is generated by the processor 101 in response to an instruction from an operator, for example, as a part of the installation work of the notification device 100. Further, the management table TAA is updated by the processor 101 in response to the instruction of the operator, for example, as a part of the work of changing the shelf allocation of the display fixture 200 to be monitored.

Next, the operation of the notification device 100 configured as described above will be described. The contents of the processing described below are merely examples, and the order of some processing may be changed, some processing may be omitted, or another processing may be added as appropriate.

If the notification device 100 is activated, the processor 101 executes information processing according to the notification program PRA as notification control processing.

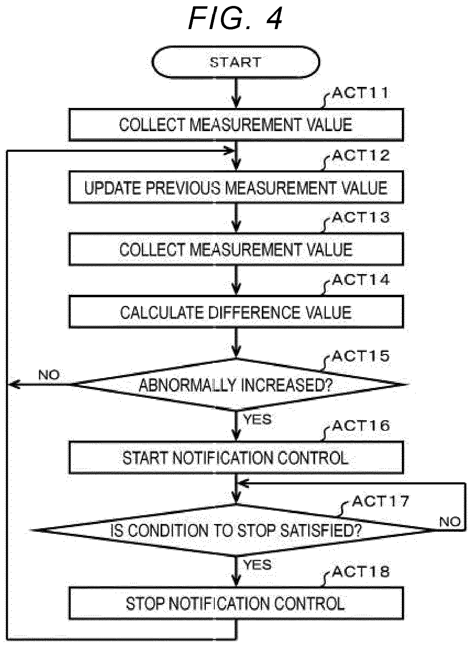

FIG. 4 is a flowchart of the notification control processing.

In ACT 11, the processor 101 collects measurement values from each of the plurality of weighing scales 202 provided on the display fixture 200 to be monitored.

In ACT 12, the processor 101 updates the previous measurement value with the measurement value collected by ACT 11. For example, the processor 101 searches the management table TAA for the data record REA in which the weighing scale ID of the weighing scale 202 that outputs the acquired measurement value is set in the field FAA, and sets the acquired measurement value in the field FAE of the corresponding data record REA.

In ACT 13, the processor 101 collects measurement values from each of the plurality of weighing scales 202 provided on the display fixture 200 to be monitored.

In ACT 14, the processor 101 calculates the difference value between the measurement value acquired by ACT 13 (hereinafter, referred to as current measurement value) and the previous measurement value for each of the weighing scales 202. For example, the processor 101 subtracts the previous measurement value set in the field FAE of the data record REA in which the weighing scale ID of one weighing scale 202 is set in the field FAA from the current measurement value obtained from the same weighing scale 202. The processor 101 may subtract the previous measurement value from the current measurement value.

In ACT 15, the processor 101 confirms whether or not there is an abnormally increased current measurement value. For example, the processor 101 confirms whether or not each of the difference values calculated by ACT 14 is an abnormal value, which is not the case if a regular commodity to be placed in the storage space is placed. For example, the processor 101 divides the difference value calculated for one weighing scale 202 by the weight per single item set in the field FAD of the data record REA in which the weighing scale ID of the same weighing scale 202 is set in the field FAA. If the absolute value of the value after the decimal point among the division values obtained by this calculation is within a predetermined anomaly range, it is determined that the current measurement value used for calculating the difference value is abnormally increased. The anomaly range is the range from a first threshold set between 0 and 1 to a second threshold set greater than the first threshold between 0 and 1. The first threshold and the second threshold may be arbitrarily set by a designer or administrator of the notification device 100. In general, it is preferable that the first threshold and the second threshold are set in consideration of at least the expected variation in weight between individual instances of the same commodity and the normal measurement error of the relevant weighing scale 202.

If there is no change in the commodities placed in the storage space, the difference between measurements by the weighing scale 202 corresponding to the storage space will be zero (0) or approximately so, such as a minute value corresponding to the measurement error of the weighing scale 202. In such a case, since the measured value divided by the expect individual commodity weight (the per item weight) will also be approximately zero. The absolute value after the decimal point in the divided value (no change measured weight divided by per item weight) should also be a value close to 0 and this value should be the first threshold or less. As such, the processor 101 determines that there is no abnormal increase in the current measurement value. Furthermore, if n (where n is an integer of 1 or more) regular commodities are placed in the storage place, the difference between the current measurement value from the weighing scale 202 for the storage space will be a value approximately n times the weight per single item. In this case, since divided value will be around n (integer value), and the absolute value after the decimal point will also be approximately 0 or alternatively close to 1. That is, the value after the decimal point will likely be either the first threshold or less or the second threshold or more. Therefore, the processor 101 determines that there is no abnormal increase in the current measurement value. When the processor 101 determines that there is no abnormal increase in any of current measurement values for the various weighing scales 202, the processor 101 determines NO in ACT 15 since there is no abnormally increased current measurement value, and returns to ACT 12 to repeat processing in the same manner as described above. That is, the processor 101 updates the previous measurement value to match the current measurement value, and then repeats ACT 13 to ACT 15.

If a commodity COB (different from the regular commodity COA) is placed in the storage space on the left side of the second shelf board 201 from the top of the left side display fixture 200 illustrated in FIG. 2, the measurement value of the weighing scale 202 provided for this storage space on this shelf board 201 increases by the weight of the commodity COB. The weight of the commodity COB is the value obtained as a difference from the previous measurement value. Then, because this difference does not match the expected weight of a commodity COA, the value after the decimal point after dividing the difference value by the weight per item for commodity COA, will not be close to 0 and 1. Thus, the value after the decimal point falls within the anomaly range, and therefore the processor 101 determines that there has been an abnormal increase in the current measurement value. When the processor 101 determines that there has been an abnormal increase in any of the current measurement values, the processor 101 determines YES in ACT 15, and proceeds to ACT 16.

When the processor 101 determines YES in ACT 15 in this way, it can be considered that there has been a detection of an event in which an incorrect commodity has been placed at a storage space. That is, if the processor 101 executes information processing based on the notification program PRA, a computer incorporating the processor 101 can be considered to function as a detection unit.

In ACT 16, the processor 101 starts notification control. For example, the processor 101 controls the sound unit 104 to output a voice message notifying a person who has misplaced the commodity in a display fixture 200. The processor 101 reads out the address set in the field FAB of the data record REA corresponding to the weighing scale ID (field FAA) of the weighing scale 202 that output the current measurement value determined in ACT 15 as reflecting an abnormal increase. For example, the processor 101 generates a message by substituting the field FAB address for the variable "XXX" in a predetermined message such as "If you have just returned a commodity to the shelf at the address XXX, please return the commodity to the correct position." For example, if the processor 101 determines that there has been an abnormal increase in weight at the address "A-2" (as illustrated in FIG. 2), the processor 101 generates the message to be output as "If you returned a commodity to the shelf at the address A-2, please return the commodity to the correct position." Then, the processor 101 provides the data corresponding to the message to the sound unit 104, and instructs a voice output. In response to this instruction, the sound unit 104 outputs the corresponding voice message from the speaker 1041.

By specifying a particular shelf address (or storage space address) in the output voice message, it is more likely that the particular person who misplaced a commodity will be notified of the mistake should other people be present around the display fixtures 200. When the processor 101 executes information processing based on the notification program PRA, a computer incorporating the processor 101 can be considered to function as both a determination unit and a notification unit.

In ACT 17, the processor 101 waits for a notification stop condition to be satisfied. For example, the processor 101 controls the sound unit 104 so as to repeatedly output the voice message. The notification stop condition may be selected by the designer or administrator of the notification device 100. As an example, the notification stop condition output of the voice message a specified number of times or repeated output for a specified length of time. An notification stop condition can also be when the measurement value from the weighing scale 202 which output the abnormal current measurement value determined by ACT 15 returns to a value within a specified range of an integer multiple of the per single item weight of the expected commodity. Once the processor 101 determines a notification stop condition is satisfied, YES is determined in ACT 17 and the processing proceeds to ACT 18.

In ACT 18, the processor 101 stops the notification control. After that, the processor 101 returns to ACT 12 and repeats the same processing as described above.

As described above, the notification device 100 notifies a person near the storage space where a commodity was misplaced that a misplacement occurred. The notification indicates which particular storage space the misplacement is related to. Therefore, even when there are a plurality of people in the vicinity, it is possible to inform the person who misplaced a commodity such that the person will recognize responsibility for the misplacement.

Furthermore, since the notification device 100 performs notification by outputting a voice message, it is possible to make a person who is not otherwise paying attention to notice the notification.

### [Second Embodiment]

In a second embodiment, a display fixture installed in a retail store for displaying commodities that functions as a notification device for notifying a misplaced commodity will be described as an example.

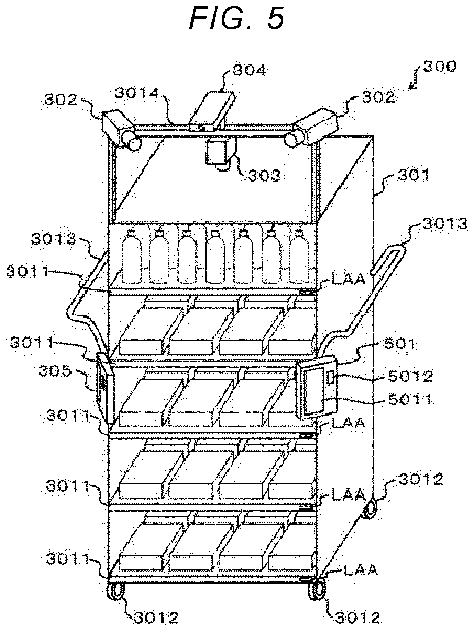

FIG. 5 is a perspective diagram schematically illustrating the appearance of a display fixture 300 according to the second embodiment.

The display fixture 300 includes a shelf 301. The shelf 301 includes a plurality of shelf boards 3011, a plurality of casters 3012, a plurality of handles 3013, and a support member 3014.

Each shelf board 3011 is positioned within the internal space of the shelf 301. The number and positions of the shelf boards 3011 are freely selectable, but FIG. 5 illustrates an example of five shelves. On each shelf board 3011, a storage space where commodities are placed is formed as illustrated in the drawing. Individual addresses are assigned to these storage spaces, and a label LAA, similar to that of the first embodiment, indicating an address is affixed to the front surface of each of the shelf boards 3011.

The casters 3012 are attached to the bottom of the shelf 301. The casters 3012 allow the display fixture 300 to be easily moved on the floor. In some examples, the casters 3012 may not be required.

A handle 3013 is attached to each of the two side wall outer surfaces of the shelf 301. The handles 3013 can be gripped by the operator when moving the display fixture 300. The number and positions of the handles 3013 are freely selectable. Furthermore, in some examples, one or more of the handles 3013 may be omitted.

The support member 3014 is attached to the top plate of the shelf 301 so as to protrude upward. The support member 3014 supports two tracking cameras 302, a surveillance camera 303, and a projector 304.

The two tracking cameras 302 provide images of a person present in an imaging area. The two tracking cameras 302 may each image the entire imaging area, or different portions of the imaging area. In some examples, a single tracking camera 302 may be utilized, or in other examples more than two tracking cameras 302 may be provided. In general, the position of the tracking camera(s) 302 can be also arbitrarily selected. The image captured by the tracking camera 302 is used for tracking a person. As the tracking camera 302, a camera device such as an optical camera, an infrared camera, a time off light (TOF) camera, or a stereo camera can be used. In general, a camera device suitable for measuring the distance to a subject, such as a TOF camera or a stereo camera, may be preferred in some examples.

The surveillance camera 303 images the opening of the shelf 301 and the region outside the shelf 301 in front of the opening. The image captured by the surveillance camera 303 is used to monitor the behavior of a person reaching into the shelf 301. As the surveillance camera 303, a camera device such as an optical camera, an infrared camera, a TOF camera, and a stereo camera can be used. As the surveillance camera 303, a camera device suitable for measuring the distance to a subject, such as a TOF camera or a stereo camera, may be preferred in some examples.

The projector 304 projects images onto the floor surface, for example. It is also possible to omit the projector 304 in some examples.

User interface (UI) units 305 are attached to both sides of the shelf 301. The UI unit 305 includes a touch panel 3051 and a reader 3052, and permits user interface operations. The touch panel 3051 is a display device that displays various screens such as an operation screen. The reader 3052 reads a member ID from a medium possessed by a customer. As the reader 3052, a data reading device that reads a visible code such as a bar code or a two-dimensional code displayed on a card surface or a display device can be used. As the reader 3052, another type of data reading device such as a magnetic card reader, an integrated circuit (IC) card reader, or a non-contact card reader can also be used. The reader 3052 may include a plurality of types of reading devices.

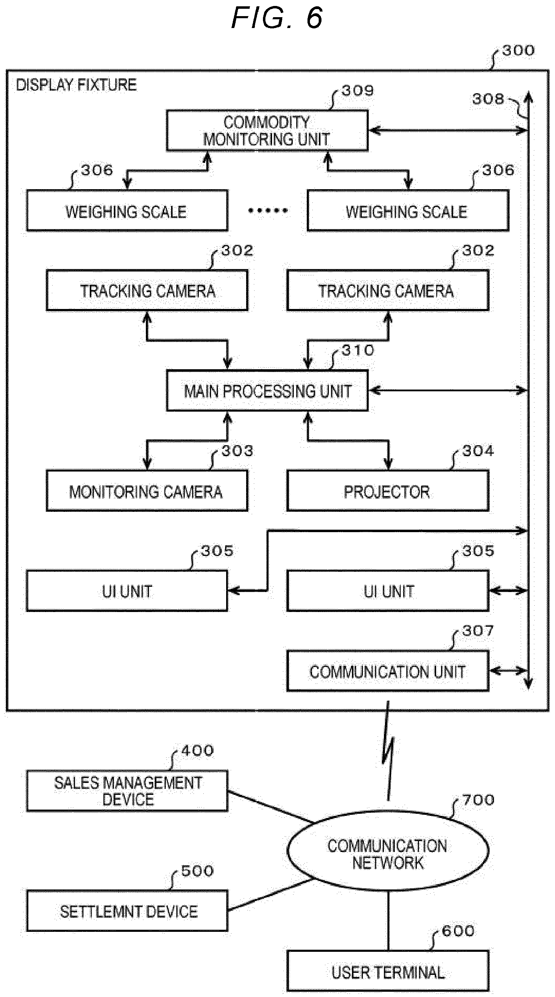

FIG. 6 is a block diagram illustrating the configuration of the display fixture 300. In FIG. 6, the same elements as illustrated in FIG. 5 are designated by the same reference numerals.

A transaction processing system is formed by the display fixture 300, a sales management device 400, a settlement device 500, and a user terminal 600. These elements can communicate with each other via a communication network 700.

The sales management device 400 performs information processing for managing the sale of commodities displayed on the display fixture 300. The settlement device 500 processes information for settlement regarding the sale of commodities displayed on the display fixture 300. The user terminal 600 is an information communication terminal possessed by a customer who intends to purchase a commodity displayed and sold at the display fixture 300. As the communication network 700, the Internet, a virtual private network (VPN), a local area network (LAN), a public communication network, a mobile communication network, or the like can be used alone or in combination as appropriate. The display fixture 300, the sales management device 400, and the settlement device 500 are provided in one store in this example. In such a case, the communication network 700 typically includes an in-store LAN.

In addition to the tracking camera 302, the surveillance camera 303, the projector 304 and the UI unit 305 illustrated in FIG. 5, the display fixture 300 includes a plurality of weighing scales 306, a communication unit 307, an internal communication path 308, and a commodity monitoring unit 309, and a main processing unit 310.

The tracking camera 302, the surveillance camera 303, and the projector 304 are connected to the main processing unit 310. The UI unit 305 is connected to the internal communication path 308.

The plurality of weighing scales 306 are provided on the shelf board 3011 and measure the weight of the commodities displayed on the shelf board 3011. One weighing scale 306 may be provided on one shelf board 3011, or the plurality of weighing scales 306 may be provided on one shelf board 3011. The weighing scale 306 outputs measurement data representing the measurement values to the commodity monitoring unit 309.

The communication unit 307 performs wireless communication for exchanging data via the communication network 700. As the communication unit 307, if the communication network 700 is a LAN a communication device compliant with the IEEE 802.11 standard can be used. However, in some examples, a communication device that performs wired communication may be used as the communication unit 307.

The internal communication path 308 enables the UI units 305, the communication unit 307, the commodity monitoring unit 309, and the main processing unit 310 to exchange data. For example, a LAN is used as the internal communication path 308.

The commodity monitoring unit 309 is an information processing unit that performs information processing for monitoring the display status of commodities on the shelf 301 based on the measurement data given from the weighing scale 306.

The main processing unit 310 is an information processing unit that identifies a person who takes out a commodity from the shelf 301 based on the images captured by the tracking camera 302 and the surveillance camera 303, and performs information processing for the person to settle the price of the commodity.

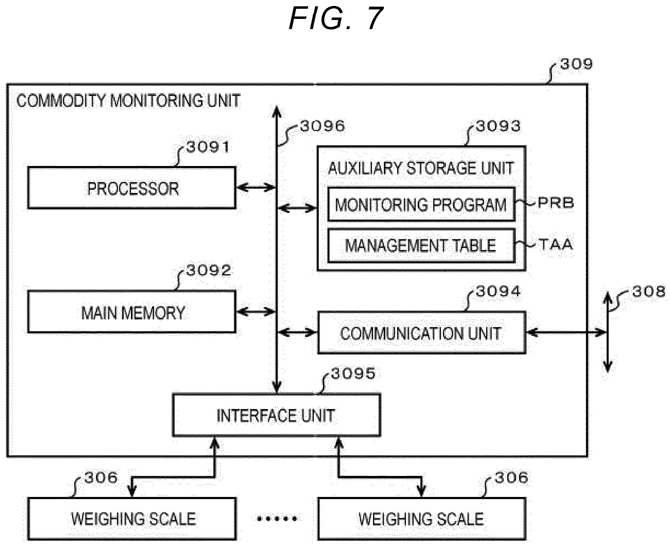

FIG. 7 is a block diagram illustrating a configuration of the commodity monitoring unit 309. In FIG. 7, the same elements as illustrated in FIGS. 5 and 6 are designated by the same reference numerals.

The commodity monitoring unit 309 includes a processor 3091, a main memory 3092, an auxiliary storage unit 3093, a communication unit 3094, an interface unit 3095, and a transmission line 3096.

The processor 3091, the main memory 3092, the auxiliary storage unit 3093, the communication unit 3094, and the interface unit 3095 can communicate with each other via the transmission line 3096. A computer for controlling the commodity monitoring unit 309 includes the processor 3091, the main memory 3092, and the auxiliary storage unit 3093 connected by the transmission line 3096.

The processor 3091 corresponds to the central portion of a computer. The processor 3091 executes information processing for realizing various functions of the commodity monitoring unit 309 according to an information processing program such as an operating system and an application program. The processor 3091 is, for example, a CPU.

The main memory 3092 includes a non-volatile memory area and a volatile memory area. The main memory 3092 stores the above information processing program in the non-volatile memory area. The main memory 3092 may store data necessary for the processor 3091 to execute information processing in the non-volatile or volatile memory area. The main memory 3092 uses a volatile memory area as a work area where data is appropriately rewritten by the processor 3091. The non-volatile memory area is, for example, a ROM. The volatile memory area is, for example, RAM.

As the auxiliary storage unit 3093, a storage device such as EEPROM, HDD, or SSD can be used. The auxiliary storage unit 3093 stores data used by the processor 3091 to perform various processing, data created by the processing of the processor 3091, and the like. The auxiliary storage unit 3093 may store the above information processing program.

The communication unit 3094 is an interface for data communication via the internal communication path 308. As the communication unit 3094, a communication device for performing data communication via a LAN can be used.

The weighing scales 306 are each connected to the interface unit 3095. The interface unit 3095 interfaces data exchanged between the processor 3091 and the scale 306. As the interface unit 3095, various interface boards such as a Universal Serial Bus (USB) board can be used. A plurality of interface units 3095 may be provided in some examples.

The transmission line 3096 includes an address bus, a data bus, a control signal line, and the like, and transmits data and control signals exchanged between each connected unit.

The auxiliary storage unit 3093 stores a monitoring program PRB, which is one of the information processing programs. The monitoring program PRB is an application program and includes instructions for information processing to realize the various functions of the commodity monitoring unit 309. In addition, a part of the storage area of the auxiliary storage unit 3093 is used as the storage area of the management table TAA.

Next, the operation of the display fixture 300 will be described. The particular contents of the processing described below are merely examples, and the order of some processing may be changed, some processing may be omitted, or additional processing may be added as appropriate.

When placing several commodities in the storage space allocated to one weighing scale 306 on the shelf board 3011, it is assumed that these commodities are (or should be) identified by the same commodity code. That is, each item is of the same type and thus share the same commodity code. Upon stocking of the shelf board 3011, and administrator, such as a store clerk, specifies which commodity type is displayed at which storage space by an input operation made via the UI unit 305 or the like. For example, the UI unit 305 displays a graphical user interface (GUI) screen on the touch panel 3051 for selecting a particular storage space of the display fixture 300, and then receives a user input or selection of a particular storage space by a touch on the GUI screen. The UI unit 305 may then causes the reader 3052 to read a commodity barcode of an item being held by the administrator so as to identify the commodity type being stored at the particular storage space by the commodity code represented by the commodity barcode read by the reader 3052. In response to this commodity specification process, the UI unit 305 finds the data record REA in which the weighing scale ID of the weighing scale 306 corresponding to the specified storage space is set in the field FAA from the management table TAA, and sets the commodity code of the specified commodity in the field FAB of the data record REA.

In general, it is only necessary that management table TAA match the display status of the commodities on the shelf board 3011, and the method of updating the management table TAA may be freely selected. For example, the processor 3091 may update the management table TAA in response to an instruction from any external information processing device. In addition, the processor 3091 may access the sales management device 400 or any other server device via the communication unit 3094, the internal communication path 308, and/or the communication network 700 to acquire the weight per single item associated with a commodity code.

If the display fixture 300 is presently in an operating state for customer support, the main processing unit 310 analyzes the images captured by the tracking camera 302 and the surveillance camera 303 and tracks the behavior of a person on the front side (front side in FIG. 5) of the shelf 301. In addition to the movement of the person, the main processing unit 310 also monitors the behavior of reaching into the shelf 301 and pulling back the outstretched hand. If the person being tracked enters his or her member ID by causing the reader 3052 of the UI unit 305 to read the barcode displayed on the display device of the user terminal 600, the main processing unit 310 manages the identity of the person being tracked by association with the member ID.

The processor 3091 in the commodity monitoring unit 309 executes monitoring processing according to the monitoring program PRB. The monitoring processing is information processing for monitoring the movement of commodities displayed on the display fixture 300.

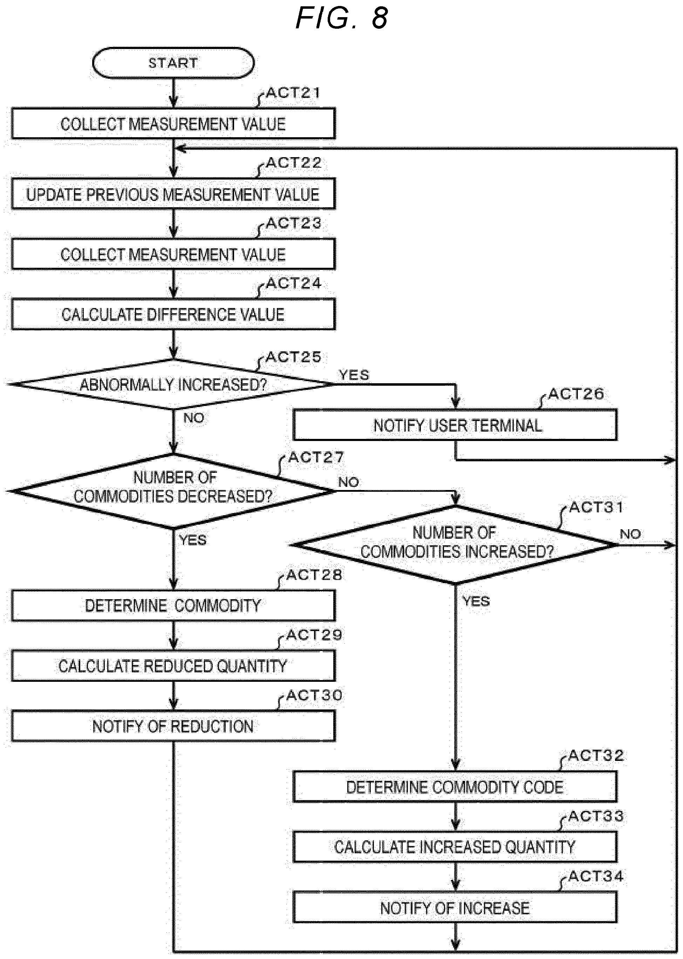

FIG. 8 is a flowchart of the monitoring processing.

In ACT 21, the processor 3091 collects measurement values from each of the weighing scales 306.

In ACT 22, the processor 3091 updates the previous measurement value with the measurement value collected by ACT 21. For example, the processor 3091 searches the management table TAA for the data record REA in which the weighing scale ID of the weighing scale 306 that outputs the acquired measurement value is set in the field FAA, and sets the acquired measurement value in the field FAE of the corresponding data record REA.

In ACT 23, the processor 3091 collects measurement values from each of the plurality of weighing scales 306.

In ACT 24, the processor 3091 calculates the difference value between the measured value acquired in ACT 23 (hereinafter, referred to as current measurement value) and the previously measured value (previous measurement value) for each of the weighing scales 306. This processing may be, for example, the same as the processing by the processor 101 as the ACT 14 in FIG. 4.

In ACT 25, the processor 3091 confirms whether or not there is an abnormally increased current measurement value. This processing may be, for example, the same as the processing by the processor 101 as the ACT 15 in FIG. 4. If it is determined that there is an abnormal increase in any current measurement value, the processor 3091 determines that there is an abnormally increased current measurement value and determines YES in ACT 25, and proceeds to ACT 26.

If the processor 3091 determines YES in ACT 25 in this way, an event in which a commodity not to be placed in the storage space is placed in the storage space is detected. That is, if the processor 3091 executes information processing based on the monitoring program PRB, the computer having the processor 3091 functions as a detection unit.

In ACT 26, the processor 3091 notifies the user terminal 600. For example, the processor 3091 inquires the main processing unit 310 about a person who performs a behavior that causes an abnormal increase in the current measurement value, and acquires a member ID of the corresponding person. Then, the processor 3091 sends the notification data including the address of the storage space where the current measurement value is measured if an abnormal increase occurred from the communication unit 307 to the communication network 700 with the user terminal 600 registered in advance as a notification destination for the acquired member ID as a destination. The processor 3091 may perform the processing for deciding the address to be included in the notification data, for example, the same processing as the processing by the processor 101 as the ACT 16 in FIG. 4. The association between the member ID and the user terminal 600 being set as a notification destination is managed by, for example, a member management database stored in the storage device in the main processing unit 310. In this case, the processor 3091 determines the destination user terminal 600 by the inquiring of the main processing unit 310. After that, the processor 101 returns ACT 22.

When receiving the above notification data transmitted by the communication network 700, the user terminal 600 performs a notification operation by displaying a text message such as "Please return the commodity that just returned to the address A-2 to the correct position." or outputting a voice message based on the notification data.

The decision of the above address corresponds to determining the storage space where misplacement occurred. Further, deciding the user terminal 600 as a transmission destination of the notification data corresponds to deciding the terminal associated with the person who placed the commodity as a notification destination. Then, by the above notification to the user terminal 600, the person who misplaced the commodity is notified of a mistake with a notification of the storage space where the misplacement occurred. Thus, if the processor 3091 executes information processing based on the monitoring program PRB, the computer having the processor 3091 functions as a determination unit, a decision unit and a notification unit.

If there is no abnormal increase in any the current measurement values, the processor 3091 determines that there is no abnormally increased current measurement value and determines NO in ACT 25, and proceeds to ACT 27.

In ACT 27, the processor 3091 confirms whether or not the number of commodities placed in the display fixture 300 is decreased. For example, if the current measurement value is smaller than the previous measurement value and the difference is equal to or higher than a specified value, the processor 3091 determines that the number of commodities in the storage space corresponding to the weighing scale 306 that outputs those measurement values is decreased. That is, if the difference value calculated by ACT 14 includes a difference value that is a negative value and whose absolute value is equal to or higher than the specified value, the processor 3091 determines that the number of commodities in the storage space related to the difference value is decreased. Then, the processor 3091 determines YES in this case and proceeds to ACT 28.

In ACT 28, the processor 3091 determines the reduced commodity. For example, the processor 3091 finds the data record REA in which the weighing scale ID of the weighing scale 306 that output the decreased measurement value as described above is set in the field FAA from the management table TAA. Then, the processor 3091 determines the reduced commodity identified by the commodity code set in the field FAB of the corresponding data record REA.

In ACT 29, the processor 3091 calculates the reduced quantity. For example, the processor 3091 uses an integer value obtained by performing a predetermined rounding processing on the value obtained by dividing the difference value obtained by ACT 24 by the weight per single item set in the field FAC of the data record REA associated with the same weighing scale 306 in the management table TAA as the reduced quantity.

In ACT 30, the processor 3091 notifies the main processing unit 310 of the reduction of commodities. For example, the processor 3091 sends notification data for notifying the decrease in the number of commodities across the internal communication path 308 from the communication unit 3094 to the main processing unit 310. The processor 3091 includes the identification data that identifies the notification as a reduction, the commodity code of the reduced commodity, and the reduced quantity in the above notification data.

If the decrease in the number of commodities cannot be confirmed, the processor 3091 determines NO in ACT 27 and proceeds to ACT 31.

In ACT 31, the processor 3091 confirms whether or not the number of commodities placed in the display fixture 300 is increased. For example, if the current measurement value is larger than the previous measurement value and the difference is equal to or higher than a specified value, the processor 3091 determines that the number of commodities in the storage space corresponding to the weighing scale 306 that outputs those measurement values is increased. That is, if the difference value calculated by ACT 14 includes a difference value that is a positive value and whose absolute value is equal to or higher than the specified value, the processor 3091 determines that the number of commodities in the storage space related to the difference value is increased. Then, the processor 3091 determines YES in this case and proceeds to ACT 32.

In ACT 32, the processor 3091 identifies the increased commodity. For example, the processor 3091 finds the data record REA with the weighing scale ID (field FAA) matching the weighing scale 306 that measured the increased measurement value in the management table TAA. Then, the processor 3091 identifies the increased commodity corresponding to the commodity code set in the field FAB of the corresponding data record REA.

In ACT 33, the processor 3091 calculates the increased quantity. For example, the processor 3091 uses an integer value obtained by performing a predetermined rounding processing on the value obtained by dividing the difference value obtained by ACT 28 by the weight per single item set in the field FAC of the data record REA associated with the same weighing scale 306 as the increased quantity.

In ACT 34, the processor 3091 notifies the main processing unit 310 of the increase in the number of commodities. For example, the processor 3091 sends notification data for notifying the increase in the number of commodities across the communication path 308 from the communication unit 3094 to the main processing unit 310. The processor 3091 includes the identification data that identifies the notification as an increase, the commodity code of the increased commodity, and the increased quantity in the above notification data.

After finishing the notification in ACT 30 or ACT 34, the processor 3091 returns to ACT 22 in either case, and repeats the subsequent processing in the same manner as described above.

Upon receiving the notification data for the reduction notification or the increase notification described above, the main processing unit 310 determines a take-out person who took out the reduced commodity from the display fixture 300 or a return person who returned the increased commodity to the display fixture 300. If a customer takes out a commodity from the storage space or returns a commodity to the storage space, the customer stretches his or her arm toward the storage space and then pulls the arm. Therefore, for example, the main processing unit 310 determines, among the persons whose behavior being monitored, a person who performs the above-mentioned behavior with respect to the storage space of the reduced or increased commodity as the take-out person or the return person. Then, the main processing unit 310 requests the sales management device 400 to add the taken-out commodities or exclude the returned commodities with respect to the purchased commodities for the member who is the take-out person or the return person.

Upon receiving the request, the sales management device 400 updates the list of purchased commodities of the corresponding member.

The main processing unit 310 requests the sales management device 400 to start the settlement if predetermined conditions are satisfied. In response to this request, the sales management device 400 instructs the settlement device 500 to settle the price for the commodity registered as the purchased commodity for the corresponding member. Upon receiving the instruction, the settlement device 500 settles the above price by using the settlement information registered for the member. The processing for this settlement may be processing for as credit card settlement, electronic money settlement, or other payment methods.

As the processing for managing the list of purchased commodities and settlement, the processing performed by a POS (point-of-sale) system can be applied.

As described above, the display fixture 300 notifies the person who misplaced a commodity in a storage space that the misplacement occurred via the user terminal 600 with a notification that indicates the storage space where the misplacement occurred. Therefore, even when there are a plurality of people in the vicinity, it is possible to inform the person who misplaced a commodity such that the person will recognize responsibility for the misplacement.

The following various modifications are possible.

The present disclosure can be applied to in other areas besides retail store product displays such as in the above embodiments. For examples, embodiments can be utilized to prevent misplacement of articles on a storage shelf in a warehouse or misplacement of books on a bookshelf in a library.

In general, in some examples, misplacement may be detected based on the analysis of images commodities in the storage space as captured by a camera or the reading of RFID tags attached to the commodities rather than by weight changes or the like.

In the some embodiments, a lamp or a display screen may be used to visually provide the notification of a mistake.

A display fixture 300 may be further modified to output a voice message, display a text message, or the like for providing additional or alternative notifications of mistakes or the like.

Some or all of the described functions realized by the processor 101 and the processor 3091 by information processing in the above examples can instead be realized by hardware that executes information processing such as a logic circuit or the like rather than by execution of software program instructions or the like. Likewise, such above-described functions can also be realized by combining software and hardware such as a logic circuit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A notification device (100) for smart display fixtures (200), the notification device (100) comprising:
an interface unit (105) configured to connect to a sensor of a display fixture (200), the sensor being a weighing scale (202);
a notification output unit; and
a processor (101) configured to:
detect, based on output from the sensor, placement of an article on the display fixture (200) at a location not designated for the article, and
cause the notification output unit to output a notification for notifying a person of the detected placement of the article on the display fixture (200) at the location not designated for the article,
**characterized in that** the processor is configured to detect the placement of the article on the display fixture (200) at the location not designated for the article by:
storing an initial weight value from the sensor,
collecting a current weight value from the sensor,
calculating a difference between the initial weight value and the current weight value,
dividing the calculated difference by an expected weight for individual articles designated for the location, and
comparing the decimal portion of any remainder to a first threshold value greater than zero and a second threshold value less than 1.

2. The notification device (100) according to claim 1, wherein the notification output unit comprises a speaker unit that is attached to the display fixture (200).

3. The notification device (100) according to claim 1, wherein
the notification output unit comprises a communication interface, and
the processor (101) is further configured to cause the communication interface to output a notification message to a customer terminal of a customer responsible for placement of the article on the display fixture (200) at the location not designated for the article.

4. The notification device (100) according to any one of claims 1 to 3, wherein the processor (101) is configured to detect the placement of the article on the display fixture (200) at the location not designated for the article based on an expected weight for articles at the location.

5. The notification device (100) according to any one of claims 1 to 4, wherein the notification output unit comprises a projector positioned to output a visual image onto a position adjacent to the display fixture (200).

6. The notification device (100) according to any one of claims 1 to 5, wherein the interface unit (105) is configured to connect to a plurality of sensors of the display fixture (200).

7. The notification device (100) according to any one of claims 1 to 6, wherein the interface unit (105) is configured to connect to a plurality of sensors of a plurality of display fixtures (200).

8. The notification device (100) according to any one of claims 1 to 7, wherein the processor (101) is further configured to cause the notification output unit to output the notification until a stop condition is satisfied.

9. A display fixture (200), comprising:
a display surface on which items can be placed;
a sensor configured to detect placement of an item on the display surface; and
the notification device (100) according to any one of claims 1 to 8.

10. The display fixture (200) according to claim 9, wherein the sensor is a weighing scale (202).

11. A notification method for informing a person an article has been placed at an incorrect position on a display fixture (200), the notification method comprising:
based on output from a sensor on a display fixture (200), detecting placement of an article on the display fixture (200) at a location not designated for the article, the sensor being a weighing scale (202); and
causing a notification output unit on the display fixture (200) to output a notification for notifying a person of the detected placement of the article on the display fixture (200) at the location not designated for the article,
**characterized in that** detecting the placement of the article on the display fixture (200) at the location not designated for the article includes:
storing an initial weight value from the sensor,
collecting a current weight value from the sensor,
calculating a difference between the initial weight value and the current weight value,
dividing the calculated difference by an expected weight for individual articles designated for the location, and
comparing the decimal portion of any remainder to a first threshold value greater than zero and a second threshold value less than 1.

## Patentansprüche

1. Mitteilungsvorrichtung (100) für intelligente Ausstellträger (200), die Mitteilungsvorrichtung (100) umfassend:
eine Schnittstelleneinheit (105), die konfiguriert ist, um mit einem Sensor eines Ausstellträgers (200) verbunden zu sein, wobei der Sensor eine Waage (202) ist; eine Mitteilungsausgabeeinheit; und
einen Prozessor (101), der zu Folgendem konfiguriert ist:
Erkennen, basierend auf einem Ausgang von dem Sensor, ein die Platzieren eines Artikels auf dem Ausstellträger (200) an einer Stelle, die nicht für den Artikel bestimmt ist, und
Veranlassen der Mitteilungsausgabeeinheit, eine Mitteilung auszugeben, um einer Person das erkannte Platzieren des Artikels auf dem Ausstellträger (200) an der Stelle, die nicht für den Artikel bestimmt ist, mitzuteilen,
**dadurch gekennzeichnet, dass** der Prozessor konfiguriert ist, um das Platzieren des Artikels auf dem Ausstellträger (200) an der Stelle, die nicht für den Artikel bestimmt ist, zu erkennen:
Speichern eines anfänglichen Gewichtswerts von dem Sensor,
Erfassen eines aktuellen Gewichtswerts von dem Sensor,
Berechnen einer Differenz zwischen dem anfänglichen Gewichtswert und dem aktuellen Gewichtswert,
Dividieren der berechneten Differenz durch ein erwartetes Gewicht für individuelle Artikel, die für die Stelle bestimmt sind, und
Vergleichen des Dezimalanteils eines Rests mit einem ersten Schwellenwert größer als Null und einem zweiten Schwellenwert kleiner als 1.

2. Mitteilungsvorrichtung (100) nach Anspruch 1, wobei die Mitteilungsausgabeeinheit eine Lautsprechereinheit umfasst, die an dem Ausstellträger (200) angebracht ist.

3. Mitteilungsvorrichtung (100) nach Anspruch 1, wobei
die Mitteilungsausgabeeinheit eine Kommunikationsschnittstelle umfasst, und
der Prozessor (101) ferner konfiguriert ist, um die Kommunikationsschnittstelle zu veranlassen, eine Mitteilungsnachricht an ein Kundenendgerät eines Kunden auszugeben, der für das Platzieren des Artikels auf dem Ausstellträger (200) an der Stelle, die nicht für den Artikel bestimmt ist, verantwortlich ist.

4. Mitteilungsvorrichtung (100) nach einem der Ansprüche 1 bis 3, wobei der Prozessor (101) konfiguriert ist, um das Platzieren des Artikels auf dem Ausstellträger (200) an der Stelle, die nicht für den Artikel bestimmt ist, basierend auf einem erwarteten Gewicht für Artikel an der Stelle zu erkennen.

5. Mitteilungsvorrichtung (100) nach einem der Ansprüche 1 bis 4, wobei die Mitteilungsausgabeeinheit einen Projektor umfasst, der positioniert ist, um ein visuelles Bild auf eine Position angrenzend an den Ausstellträger (200) auszugeben.

6. Mitteilungsvorrichtung (100) nach einem der Ansprüche 1 bis 5, wobei die Schnittstelleneinheit (105) konfiguriert ist, um mit einer Vielzahl von Sensoren des Ausstellträger (200) verbunden zu sein.

7. Mitteilungsvorrichtung (100) nach einem der Ansprüche 1 bis 6, wobei die Schnittstelleneinheit (105) konfiguriert ist, um mit einer Vielzahl von Sensoren einer Vielzahl von Ausstellträgern (200) verbunden zu sein.

8. Mitteilungsvorrichtung (100) nach einem der Ansprüche 1 bis 7, wobei der Prozessor (101) ferner konfiguriert ist, um die Mitteilungsausgabeeinheit zu veranlassen, die Mitteilung auszugeben, bis eine Stoppbedingung erfüllt ist.

9. Ausstellträger (200), umfassend:
eine Ausstellfläche, auf der Gegenstände platziert werden können;
einen Sensor, der konfiguriert ist, um ein Platzieren eines Gegenstands auf der Ausstellfläche zu erfassen; und
die Mitteilungsvorrichtung (100) nach einem der Ansprüche 1 bis 8.

10. Ausstellträger (200) nach Anspruch 9, wobei der Sensor eine Waage (202) ist.

11. Mitteilungsverfahren, um eine Person darüber zu informieren, dass ein Artikel an einer falschen Position auf einem Ausstellträger (200) platziert worden ist, das Mitteilungsverfahren umfassend: Basierend auf dem Ausgang eines Sensors an einem Ausstellträger (200), Erkennen eines Platzierens eines Artikels auf dem Ausstellträger (200) an einer Stelle, die nicht für den Artikel bestimmt ist, wobei der Sensor eine Waage (202) ist; und
Veranlassen einer Mitteilungsausgabeeinheit an dem Ausstellträger (200), eine Mitteilung auszugeben, um einer Person das erkannte Platzieren des Artikels auf dem Ausstellträger (200) an der Stelle, die nicht für den Artikel bestimmt ist, mitzuteilen,
**dadurch gekennzeichnet, dass** das Erkennen des Platzieren des Artikels auf dem Ausstellträger (200) an der Stelle, die nicht für den Artikel bestimmt ist, Folgendes beinhaltet:
Speichern eines anfänglichen Gewichtswerts von dem Sensor,
Erfassen eines aktuellen Gewichtswerts von dem Sensor,
Berechnen einer Differenz zwischen dem anfänglichen Gewichtswert und dem aktuellen Gewichtswert,
Dividieren der berechneten Differenz durch ein erwartetes Gewicht für individuelle Artikel, die für die Stelle bestimmt sind, und
Vergleichen des Dezimalanteils eines Rests mit einem ersten Schwellenwert größer als **Null** und einem zweiten Schwellenwert kleiner als 1.

## Revendications

1. Dispositif de notification (100) pour présentoirs intelligents (200), le dispositif de notification (100) comprenant :
une unité d'interface (105) configurée pour se connecter à un capteur d'un présentoir (200), le capteur étant une balance (202) ;
une unité de sortie de notification ; et
un processeur (101) configuré pour :
détecter, sur la base d'une sortie provenant du capteur, le placement d'un article sur le présentoir (200) à un emplacement non désigné pour l'article, et
amener l'unité de sortie de notification à fournir en sortie une notification destinée à notifier à une personne le placement détecté de l'article sur le présentoir (200) à l'emplacement non désigné pour l'article,
**caractérisé en ce que** le processeur est configuré pour détecter le placement de l'article sur le présentoir (200) à un emplacement non désigné pour l'article en :
stockant une valeur de poids initiale provenant du capteur,
collectant une valeur de poids actuelle à partir du capteur,
calculant une différence entre la valeur de poids initiale et la valeur de poids actuelle,
divisant la différence calculée par un poids attendu pour des articles individuels désignés pour l'emplacement, et
comparant la partie décimale de tout reste à une première valeur de seuil supérieure à zéro, et à une deuxième valeur de seuil inférieure à 1.

2. Dispositif de notification (100) selon la revendication 1, dans lequel l'unité de sortie de notification comprend une unité de haut-parleur qui est fixée au présentoir (200).

3. Dispositif de notification (100) selon la revendication 1, dans lequel
l'unité de sortie de notification comprend une interface de communication, et
le processeur (101) est en outre configuré pour amener l'interface de communication à fournir en sortie un message de notification à un terminal client d'un client responsable du placement de l'article sur le présentoir (200) à l'emplacement non désigné pour l'article.

4. Dispositif de notification (100) selon l'une quelconque des revendications 1 à 3, dans lequel le processeur (101) est configuré pour détecter le placement de l'article sur le présentoir (200) à l'emplacement non désigné pour l'article sur la base d'un poids attendu pour des articles à l'emplacement.

5. Dispositif de notification (100) selon l'une quelconque des revendications 1 à 4, dans lequel l'unité de sortie de notification comprend un projecteur positionné pour fournir en sortie une image visuelle sur une position adjacente au présentoir (200).

6. Dispositif de notification (100) selon l'une quelconque des revendications 1 à 5, dans lequel l'unité d'interface (105) est configurée pour se connecter à une pluralité de capteurs du présentoir (200).

7. Dispositif de notification (100) selon l'une quelconque des revendications 1 à 6, dans lequel l'unité d'interface (105) est configurée pour se connecter à une pluralité de capteurs d'une pluralité de présentoirs (200).

8. Dispositif de notification (100) selon l'une quelconque des revendications 1 à 7, dans lequel le processeur (101) est en outre configuré pour amener l'unité de sortie de notification à fournir en sortie la notification jusqu'à ce qu'une condition d'arrêt soit satisfaite.

9. Présentoir (200), comprenant :
une surface de présentation sur laquelle des articles peuvent être placés ;
un capteur configuré pour détecter le placement d'un article sur la surface de présentation ; et
le dispositif de notification (100) selon l'une quelconque des revendications 1 à 8.

10. Présentoir (200) selon la revendication 9, dans lequel le capteur est une balance (202).

11. Procédé de notification pour informer une personne qu'un article a été placé à une position incorrecte sur un présentoir (200), le procédé de notification comprenant le fait de :
sur la base d'une sortie provenant d'un capteur sur un présentoir (200), détecter le placement d'un article sur le présentoir (200) à un emplacement non désigné pour l'article, le capteur étant une balance (202) ; et
amener une unité de sortie de notification sur le présentoir (200) à fournir en sortie une notification destinée à notifier à une personne le placement détecté de l'article sur le présentoir (200) à l'emplacement non désigné pour l'article,
**caractérisé en ce que** la détection du placement de l'article sur le présentoir (200) à l'emplacement non désigné pour l'article comprend le fait de :
stocker une valeur de poids initiale provenant du capteur,
collecter une valeur de poids actuelle à partir du capteur,
calculer une différence entre la valeur de poids initiale et la valeur de poids actuelle,
diviser la différence calculée par un poids attendu pour des articles individuels désignés pour l'emplacement, et
comparer la partie décimale de tout reste à une première valeur de seuil supérieure à zéro, et à une deuxième valeur de seuil inférieure à 1.
